# FASCICULE DE BREVET EUROPEEN

(11) **EP 4 045 873 B1**
(45) Date de publication et mention de la délivrance du brevet: **08.07.2026**
(21) Numéro de dépôt: 20788841.3
(22) Date de dépôt: 15.10.2020
(51) Int. Cl.: G01C 19/5642, G01C 19/5656, G01C 19/5719, G01C 19/574, G01C 19/5705, G01C 19/5712

(54) **CAPTEUR À COMPENSATION MÉCANIQUE DE L'ANISOTROPIE DE FRÉQUENCE**
SENSOR MIT MECHANISCHER KOMPENSATION DER FREQUENZANISOTROPIE
SENSOR WITH MECHANICAL COMPENSATION FOR FREQUENCY ANISOTROPY

(30) Priorité: 18.10.2019 FR 1911721
(43) Date de publication de la demande: 24.08.2022
(73) Titulaire: Safran Electronics & Defense, 75015 Paris (FR)
(72) Inventeur: JEANROY, Alain, 77550 MOISSY-CRAMAYEL (FR); ONFROY, Philippe, 77550 MOISSY-CRAMAYEL (FR)
(74) Mandataire: Cabinet Boettcher
(86) Numéro de dépôt international: PCT/EP2020/079132
(87) Numéro de publication internationale: WO 2021/074346

(56) Documents cités:
- US-A1- 2009 188 318

## Description

### ARRIERE PLAN DE L'INVENTION

La présente invention concerne le domaine des capteurs angulaires inertiels.

Il est connu, notamment du document WO-A-2013/308534 un capteur angulaire comprenant un bâti et un résonateur axisymétrique vibrant comportant une première masse et une deuxième masse disposée de manière concentrique dans la première masse. Les masses ont une forme carrée et sont reliées à un cadre intermédiaire par des ressorts mécaniques de suspension disposés par paires aux angles des masses. Chaque ressort mécanique de suspension comprend une première lame élastique reliée à la masse et une deuxième lame élastique qui a une extrémité reliée au cadre intermédiaire et une extrémité opposée reliée à une extrémité de la première lame élastique de telle manière que la deuxième lame élastique s'étende perpendiculairement à la première lame élastique. Les premières lames élastiques de chaque paire de ressorts mécaniques de suspension s'étendent perpendiculairement l'une à l'autre et les lames élastiques de chaque paire de ressorts mécaniques de suspension s'étendent perpendiculairement l'une à l'autre. Le cadre intermédiaire est relié au bâti par des ressorts mécaniques de suspension identiques à ceux précédemment décrits de telle manière que les masses sont suspendues au bâti via le cadre intermédiaire.

Les défauts de fabrication du capteur angulaire entraînent l'apparition d'une anisotropie de fréquence qu'il est nécessaire de réduire pour obtenir une précision acceptable. Une solution est de jouer sur les raideurs des ressorts mais cette solution ne permet pas de réduire suffisamment l'anisotropie de fréquence.

Une autre solution est de recourir à des ressorts électrostatiques qui sont commandés pour compenser ces anisotropies de fréquence. Cependant, la compensation de l'anisotropie de fréquence demande des tensions relativement importantes incompatibles avec les contraintes de réalisation et de précision de certaines applications.

Il est également connu du document US 2009/188318 A1 de compenser les problèmes d'anisotropie d'un gyroscope MEMS en ajoutant des ressorts/poutres de support reliant le substrat à un anneau, lesdites poutres étant situées à un angle correspondant au module d'élasticité (dépendant de l'orientation cristalline).

### OBJET DE L'INVENTION

L'invention a notamment pour but un capteur angulaire ayant une structure autorisant une compensation physique relativement importante des anisotropies de fréquence.

### RESUME DE L'INVENTION

A cet effet, on prévoit, selon l'invention un capteur angulaire à résonateur vibrant, comprenant un bâti, une première masse et une deuxième masse qui sont concentriques, et des moyens de suspension des masses par rapport au bâti. Les masses sont reliées à des ressorts mécaniques agencés symétriquement en paires elles-mêmes disposées symétriquement les unes par rapport aux autres. Chaque ressort comprend une première lame élastique et une deuxième lame élastique reliées l'une à l'autre par une extrémité, et la première lame élastique de l'un des ressorts de chaque paire est parallèle à la deuxième lame élastique de l'autre des ressorts de la même paire. Les quatre lames élastiques d'au moins une des paires de ressorts comprennent deux paires de lames adjacentes formant entre elles un angle de 45° environ. Le capteur est dépourvu de ressort électrostatique entre les éléments reliés par ladite au moins une des paires de ressorts comprenant les deux paires de lames adjacentes formant entre elles un angle de 45° environ. Les éléments reliés par ladite au moins une des paires de ressorts comprenant les deux paires de lames adjacentes formant entre elles un angle de 45° environ sont les masses et le bâti lorsque lesdites au moins une des paires de ressort s'étendent entre les masses et le bâti et/ou les éléments reliés par ladite au moins une des paires de ressorts comprenant les deux paires de lames adjacentes formant entre elles un angle de 45° environ sont les masses lorsque lesdites au moins une des paires de ressort s'étendent entre les masses. Les masses ont la même contribution à l'anisotropie de fréquence pour chacun des modes propres du résonateur et l'anisotropie de fréquence est réglable avec l'invention en jouant sur la raideur des ressorts. L'orientation particulière des ressorts selon l'invention permet d'assurer ce réglage dans plusieurs directions correspondant aux différentes orientations possibles des défauts de raideur. Il n'est donc pas nécessaire d'avoir des ressorts électrostatiques à cette fin entre les éléments en question.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
La figure 1 est une vue schématique de dessus d'un capteur angulaire selon un premier mode de réalisation de l'invention ;
La figure 2 est une vue schématique agrandie illustrant l'agencement des moyens de suspension de la deuxième masse par rapport au bâti dans ce premier mode de réalisation ;
La figure 3 est une vue schématique agrandie illustrant l'agencement des moyens de suspension de la deuxième masse par rapport au bâti dans un deuxième mode de réalisation de l'invention.

### DESCRIPTION DETAILLEE DE L'INVENTION

Le capteur angulaire ici décrit est un capteur à résonateur axisymétrique vibrant de type MEMS, le résonateur étant formé par un système masses/ressorts.

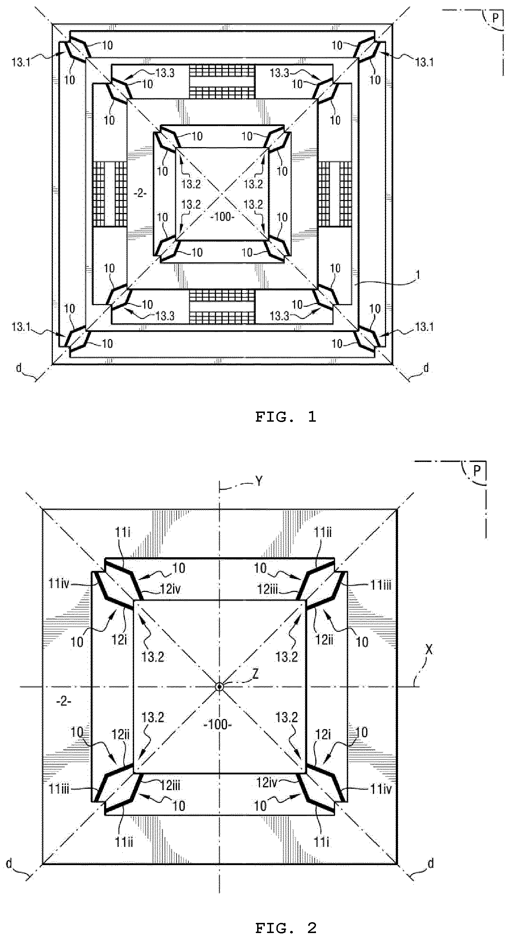

En référence aux figures 1 et 2, le capteur angulaire comprend un bâti 100, une première masse 1 et une deuxième masse 2 (également appelées corps sismiques) qui sont concentriques l'une à l'autre, et des moyens de suspension des masses. Le capteur est ici réalisé par gravure d'une plaque de silicium.

Les masses 1, 2 ont chacune la forme d'un cadre carré. La première masse 1 entoure la deuxième masse 2 de telle manière que la première masse 1 a des diagonales d confondues avec des diagonales d de la deuxième masse 2 lorsque le capteur n'est pas utilisé. Les masses 1 et 2 ont des centres de gravité confondus et ont une même valeur de masse.

Les moyens de suspension comprennent des ressorts mécaniques 10. Les ressorts mécaniques 10 comportent chacun une première lame élastique 11 et une deuxième lame élastique 12 qui sont reliées l'une à l'autre par une extrémité. Les ressorts 10 s'étendent dans le plan de suspension P qui est parallèle aux diagonales d et autorisent pour chacune des masses 1, 2 trois degrés de liberté dans le plan P (à savoir deux translations selon les axes x et y, et une rotation autour de l'axe z perpendiculaire aux deux premiers) en interdisant les autres degrés de liberté (c'est-à-dire que les masses 1, 2 ne peuvent se déplacer par rapport au bâti que parallèlement au plan P.

Les ressorts sont symétriquement agencés en paires 13 elles-mêmes disposées symétriquement les unes par rapport aux autres, à savoir :
- quatre premières paires 13.1 de ressorts 10 dont les premières lames élastiques 11 ont une extrémité reliée à la première masse 1 et les deuxièmes lames élastiques 12 ont une extrémité reliée au bâti 100,
- quatre deuxièmes paires 13.2 de ressorts 10 dont les premières lames élastiques 11 ont une extrémité reliée à la deuxième masse 2 et les deuxièmes lames élastiques 12 ont une extrémité reliée au bâti 100,
- quatre troisièmes paires 13.3 de ressorts 10 dont les premières lames élastiques 11 ont une extrémité reliée à la première masse 1 et les deuxièmes lames élastiques 12 ont une extrémité reliée à la deuxième masse 2.

Ainsi :
- le premier ensemble de ressorts 10 constitué par les quatre premières paires 13.1 de ressorts 10 relie la première masse 1 au bâti 100 et assure la suspension de la première masse 1 par rapport au bâti 100 ;
- le deuxième ensemble de ressorts 10 constitué par les quatre deuxièmes paires 13.2 de ressorts 10 relie la deuxième masse 2 au bâti 100 et assure la suspension de la deuxième masse 2 par rapport au bâti 100 ;
- le troisième ensemble de ressorts 10 constitué par les quatre troisièmes paires 13.3 de ressorts 10 relie la première masse 1 à la deuxième masse 2 et assure un couplage mécanique de la première masse 1 et de la deuxième masse 2.

Les ressorts 10 de chaque paire 13.1, 13.2, 13.3 de ressorts 10 s'étendent chacun d'un côté d'une des diagonales d de sorte que, dans chaque paire 13.1, 13.2, 13.3 de ressorts 10, les ressorts 10 sont disposés symétriquement par rapport à la diagonale d s'étendant entre eux.

Dans chaque paire 13.1, 13.2, 13.3 de ressorts 10, la première lame élastique 11 de l'un des ressorts 10 est parallèle à la deuxième lame élastique 12 de l'autre des ressorts 10 et inversement.

Dans chaque paire 13.1, 13.2, 13.3 de ressorts 10, les quatre lames élastiques 11, 12 comprennent deux paires de lames adjacentes formant entre elles un angle de 45° environ.

Plus précisément, dans le premier mode de réalisation, les premières lames élastiques 11 de chaque paire de ressorts 10 forment entre elles l'angle de 45° et les deuxièmes lames élastiques 12 de chaque paire de ressorts 10 forment entre elles l'angle de 45°. Dit autrement, les premières lames élastiques 11 de chaque paire 13.1, 13.2, 13.3 de ressorts 10 forment un angle de 22,5° par rapport à la diagonale d passant entre les ressorts 10 de ladite paire et les deuxièmes lames élastiques 12 de chaque paire 13.1, 13.2, 13.3 de ressorts 10 forment un angle de 22,5° par rapport à la diagonale d passant entre les ressorts 10 de ladite paire. La première lame élastique 11 et la deuxième lame élastique 12 de chaque ressort 10 forment ainsi entre elles un angle convexe de 135° orienté vers l'autre ressort 10 de la même paire. On notera que « convexe » et « concave » sont utilisés pour repérer les côtés de deux lames élastiques reliées l'une à l'autre : ainsi, les deux lames élastiques forment entre elles, d'un côté, un angle convexe de 135° et, de l'autre côté, un angle concave de 360°-135° soit 225°.

On remarque sur la figure 2 que, pour chaque deuxième paire 13.2, la première lame élastique 11 d'un des ressorts 10 est :
- (dans la même paire 13.2) parallèle à la deuxième lame élastique 12 de l'autre ressort 10 ;
- (dans l'autre paire 13.2 alignée sur la même diagonale d que la deuxième paire 13.2 considérée) parallèle à la deuxième lame élastique 12 du ressort 10 qui est situé du même côté de la diagonale d et parallèle à la première lame élastique 11 du ressort 10 situé du côté opposé de la diagonale d ;

- (dans la deuxième paire 13.2 qui est la plus proche et qui est alignée sur l'autre diagonale d) perpendiculaire à la deuxième lame élastique 12 du ressort 10 qui se trouve le plus proche et à la première lame élastique 11 opposée ;
- (dans la deuxième paire 13.2 qui est la plus éloignée et qui est alignée sur l'autre diagonale d) perpendiculaire à la première lame élastique 11 du ressort 10 le plus proche et à la deuxième lame élastique 12 du ressort 10 le plus éloigné.

Pour simplifier, toutes les lames élastiques parallèles les unes aux autres porteront les indices i, ii, iii, iv. La raideur des lames élastiques i influe sur la composante en cosinus de la raideur globale de l'ensemble de ressorts 10, la raideur des lames élastiques ii influe sur la composante en sinus, la raideur des lames élastiques iii influe sur la composante en -cosinus, et la raideur des lames élastiques iv influe sur la composante en -sinus. La raideur conditionne l'anisotropie de fréquence de sorte que le réglage de la raideur permet de compenser l'anisotropie de fréquences et donc d'améliorer la précision du capteur. La même raideur sera attribuée aux lames élastiques parallèles entre elles. La correction de raideur peut être obtenue par :
- une réduction locale de la section des ressorts par gravure laser ;
- un ajout ou un retrait de masse localisé par dépôt ou gravure ;

- une oxydation localisée du silicium ;
- une diffusion localisée d'un matériau dans le silicium.

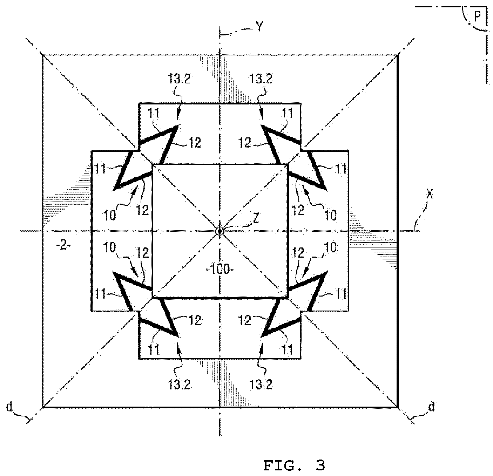

Ce dernier procédé est mis en œuvre de la manière suivante :
- dépôt préalable, sur les lames élastiques dont on veut modifier la raideur, d'un matériau diffusable dans le silicium à température modérée soit environ 300°C. La diffusion augmente le module d'Young du silicium.
- réglage de la fréquence sur un axe par un chauffage maîtrisé des lames métallisées ayant la bonne orientation par un passage de courant ou sous un faisceau infra-rouge. Le réglage de raideur se fait par couples selon les diagonales d. Chaque couple comprend la première paire 13.1 de chaque diagonale d et la deuxième paire 13.2 opposée. Dans le deuxième mode de réalisation représenté à la figure 3, la première lame élastique 11 et la deuxième lame élastique 12 de chaque ressort 10 forment entre elles l'angle convexe de 45°, cet angle étant orienté vers l'autre ressort 10 de la même paire. Dans chaque paire de ressorts 10, les premières lames élastiques 11 forment entre elles un angle de 135° et les deuxièmes lames élastiques 12 forment entre elles un angle de 135°.

Le procédé de réglage de l'anisotropie de fréquence est identique.

Les deux agencements proposés respectent de manière optimale les contraintes d'axisymétrie et de symétrie cristalline du silicium dans lequel est gravé le capteur.

Les ratios fréquence en translation / fréquence en rotation de ces deux structures sont très différents et le choix entre ces deux structures se fera en fonction des écarts de fréquences entre les modes propres.

Bien entendu, l'invention n'est pas limitée au mode de réalisation décrit mais englobe toute variante entrant dans le champ de l'invention telle que définie par les revendications.

En particulier, le capteur peut avoir une structure différente de celle décrite.

Bien que dans les modes de réalisation, toutes les paires soient agencées selon le premier mode de réalisation ou le deuxième mode de réalisation, il est possible de mixer les modes de réalisation dans un même capteur. Par exemple, les premières paires 13.1 et les deuxièmes paires 13.2 sont conformes au premier mode de réalisation et les troisièmes paires 13.3 sont conformes au deuxième mode de réalisation. En outre, seule une partie des paires de ressorts peuvent présenter des lames à 45°, les lames des autres paires de ressorts s'étendant à 90°. Par exemple :
- seules les lames des paires 13.3 sont à 45°, les lames des paires 13.1, 13.2 étant à 90° (le capteur pouvant alors comprendre au moins un ressort électrostatique s'étendant entre le bâti et la première masse et/ou entre le bâti et la deuxième masse), ou
- seules les lames des paires 13.1, 13.2 sont à 45°, les lames des paires 13.3 étant à 90°(le capteur pouvant alors comprendre au moins un ressort électrostatique s'étendant entre les masses).

Bien que plus difficilement réalisable, le côté concave de l'angle formé par les lames élastiques 11, 12 de chaque ressort 10 de chaque paire 13.1, 13.2, 13.3 peut être orienté vers le ressort 10 de la même paire.

L'angle doit être le plus proche possible de 45° compte tenu des contraintes de fabrication.

## Revendications

1. Capteur angulaire à résonateur vibrant, comprenant un bâti (100), une première masse (1) et une deuxième masse (2) qui sont concentriques, et des moyens de suspension des masses par rapport au bâti (100), dans lequel les masses sont reliées à des ressorts mécaniques (10) agencés symétriquement en paires de ressorts (13.1, 13.2, 13.3) elles-mêmes disposées symétriquement les unes par rapport aux autres, chaque ressort (10) comprend une première lame élastique (11) et une deuxième lame élastique (12) reliées l'une à l'autre par une extrémité, la première lame élastique (11) de l'un des ressorts (10) de chaque paire de ressorts (13.1, 13.2, 13.3) est parallèle à la deuxième lame élastique (12) de l'autre des ressorts (10) de la même paire de ressorts, les quatre lames élastiques (11, 12) d'au moins une des paires de ressorts (13.1, 13.2, 13.3) comprennent deux paires de lames adjacentes formant entre elles un angle de 45° environ et le capteur est dépourvu de ressort électrostatique entre les éléments reliés par ladite au moins une des paires de ressorts (13.1, 13.2, 13.3) comprenant les deux paires de lames adjacentes formant entre elles un angle de 45° environ.

2. Capteur selon la revendication 1, dans lequel les paires de ressorts (10) comprennent quatre premières paires (13.1) de ressorts (10) dont les premières lames (11) sont reliées à la première masse (1) et les deuxièmes lames (2) sont reliées au bâti (100), et quatre deuxièmes paires (13.2) de ressorts (10) dont les premières lames (11) sont reliées à la deuxième masse (2) et les deuxièmes lames (12) sont reliées au bâti (100).

3. Capteur selon la revendication 2, dans lequel les lames des ressorts des premières paires (13.1) de ressorts (10) ont des lames adjacentes formant entre elles un angle de 45° environ.

4. Capteur selon la revendication 2 ou la revendication 3, dans lequel les lames des ressorts des deuxièmes paires (13.2) de ressorts (10) ont des lames adjacentes formant entre elles un angle de 45° environ.

5. Capteurs selon l'une quelconque des revendications 2 à 4, dans lequel les paires de ressorts (10) comprennent quatre troisièmes paires (13.3) de ressorts (10) dont les premières lames (11) sont reliées à la première masse (1) et les deuxièmes lames (12) sont reliées à la deuxième masse (2).

6. Capteur selon la revendication 5, dans lequel les lames des ressorts des troisièmes paires (13.3) de ressorts (10) ont des lames adjacentes formant entre elles un angle de 45° environ.

7. Capteur selon l'une quelconque des revendications précédentes, dans lequel les premières lames élastiques (11) de ladite au moins une des paires (13.1, 13.2, 13.3) de ressorts forment entre elles l'angle de 45° et les deuxièmes lames élastiques (12) de ladite au moins une des paires (13.1, 13.2, 13.3) de ressorts forment entre elles l'angle de 45°.

8. Capteur selon l'une quelconque des revendications 1 à 7, dans lequel la première lame élastique (11) et la deuxième lame élastique (12) de chaque ressort de ladite au moins une des paires (13.1, 13.2, 13.3) de ressorts forment entre elles l'angle de 45°.

9. Capteur selon l'une quelconque des revendications précédentes, dans lequel les lames élastiques (11, 12) de chaque ressort (10) forment entre elle un angle convexe orienté vers l'autre ressort (10) de la même paire (13.1, 13.2, 13.3).

10. Capteur selon l'une quelconque des revendications précédentes, dans lequel les masses (1, 2) ont une forme de cadre carré, la première masse (1) ayant des diagonales (d) confondues avec des diagonales (d) de la deuxième masse (2), et les ressorts (10) de chaque paire (13.1, 13.2, 13.3) de ressorts (10) s'étendent chacun d'un côté d'une des diagonales (d).

11. Capteur selon l'une quelconque des revendications précédentes, dans lequel les quatre lames élastiques d'au moins une des paires de ressorts (13.1, 13.2, 13.3) comprennent deux paires de lames (11, 12) adjacentes formant entre elles un angle de 45° environ.

## Patentansprüche

1. Winkelsensor mit Schwingungsresonator, umfassend einen Rahmen (100), eine erste Masse (1) und eine zweite Masse (2), die konzentrisch zueinander angeordnet sind, sowie Aufhängungsmittel zur Aufhängung der Massen in Bezug auf den Rahmen (100), wobei die Massen mit mechanischen Federn (10) verbunden sind, welche symmetrisch in Federpaaren (13.1, 13.2, 13.3) angeordnet sind, die ihrerseits symmetrisch zueinander liegen, wobei jede Feder (10) ein erstes Federblatt (11) und ein zweites Federblatt (12) umfasst, die durch ein Ende miteinander verbunden sind, wobei das erste Federblatt (11) einer der Federn (10) aus jedem Federpaar (13.1, 13.2, 13.3) parallel zu dem zweiten Federblatt (12) der anderen der Federn (10) aus demselben Federpaar verläuft, wobei die vier Federblätter (11, 12) aus zumindest einem der Federpaare (13.1, 13.2, 13.3) zwei benachbarte Federblattpaare umfassen, die zueinander einen Winkel von etwa 45° bilden, und wobei der Sensor zwischen den Elementen, die durch das zumindest eine der Federpaare (13.1, 13.2, 13.3) verbunden sind, welches die zwei benachbarten Federblätter umfasst, die zueinander einen Winkel von etwa 45° bilden, keine elektrostatische Feder aufweist.

2. Sensor nach Anspruch 1, wobei die Paare von Federn (10) vier erste Paare (13.1) von Federn (10) umfassen, deren erste Federblätter (11) mit der ersten Masse (1) verbunden sind und deren zweite Federblätter (2) mit dem Rahmen (100) verbunden sind, sowie vier zweite Paare (13.2) von Federn (10) umfassen, deren erste Federblätter (11) mit der zweiten Masse (2) verbunden sind und deren zweite Federblätter (12) mit dem Rahmen (100) verbunden sind.

3. Sensor nach Anspruch 2, wobei die Federblätter der Federn aus den ersten Paaren (13.1) von Federn (10) benachbarte Federblätter aufweisen, die zueinander einen Winkel von etwa 45° bilden.

4. Sensor nach Anspruch 2 oder nach Anspruch 3, wobei die Federblätter der Federn aus den zweiten Paaren (13.2) von Federn (10) benachbarte Federblätter aufweisen, die zueinander einen Winkel von etwa 45° bilden.

5. Sensor nach einem der Ansprüche 2 bis 4, wobei die Paare von Federn (10) vier dritte Paare (13.3) von Federn (10) umfassen, deren erste Federblätter (11) mit der ersten Masse (1) verbunden sind und deren zweite Federblätter (12) mit der zweiten Masse (2) verbunden sind.

6. Sensor nach Anspruch 5, wobei die Federblätter der Federn aus den dritten Paaren (13.3) von Federn (10) benachbarte Federblätter aufweisen, die zueinander einen Winkel von etwa 45° bilden.

7. Sensor nach einem der vorhergehenden Ansprüche, wobei die ersten Federblätter (11) aus dem zumindest einen der Federpaare (13.1, 13.2, 13.3) zueinander den Winkel von 45° bilden und die zweiten Federblätter (12) aus dem zumindest einen der Federpaare (13.1, 13.2, 13.3) zueinander den Winkel von 45° bilden.

8. Sensor nach einem der Ansprüche 1 bis 7, wobei das erste Federblatt (11) und das zweite Federblatt (12) von jeder Feder aus dem zumindest einen der Federpaare (13.1, 13.2, 13.3) zueinander den Winkel von 45° bilden.

9. Sensor nach einem der vorhergehenden Ansprüche, wobei die Federblätter (11, 12) jeder Feder (10) zueinander einen konvexen Winkel bilden, der in Richtung auf die andere Feder (10) aus demselben Federpaar (13.1, 13.2, 13.3) ausgerichtet ist.

10. Sensor nach einem der vorhergehenden Ansprüche, wobei die Massen (1, 2) eine quadratische Rahmenform aufweisen, wobei die erste Masse (1) Diagonalen (d) aufweist, die mit Diagonalen (d) der zweiten Masse (2) zusammenfallen, und wobei sich die Federn (10) aus jedem Paar (13.1, 13.2, 13.3) von Federn (10) auf je einer Seite einer der Diagonalen (d) erstrecken.

11. Sensor nach einem der vorhergehenden Ansprüche, wobei die vier Federblätter aus zumindest einem der Federpaare (13.1, 13.2, 13.3) zwei benachbarte Federblattpaare (11, 12) umfassen, die zueinander einen Winkel von etwa 45° bilden.

## Claims

1. Angular sensor with a vibrating resonator, comprising a frame (100), a first mass (1) and a second mass (2) which are concentric, and means for suspending the masses with respect to the frame (100), in which the masses are connected to mechanical springs (10) arranged symmetrically in pairs of springs (13.1, 13.2, 13.3), themselves arranged symmetrically against one another, each spring (10) comprises a first elastic leaf (11) and a second elastic leaf (12) connected to one another by an end, the first elastic leaf (11) of one of the springs (10) of each pair of springs (13.1, 13.2, 13.3) is parallel to the second elastic leaf (12) of the other of the springs (10) of the same pair of springs, the four elastic leaves (11, 12) of at least one of the pairs of springs (13.1, 13.2, 13.3) comprise two pairs of adjacent leaves, together forming an angle of around 45°, and the sensor has no electrostatic spring between the elements connected by said at least one of the pairs of springs (13.1, 13.2, 13.3) comprising the two pairs of adjacent leaves, together forming an angle of around 45°.

2. Sensor according to claim 1, in which the pairs of springs (10) comprise four first pairs (13.1) of springs (10), of which the first leaves (11) are connected to the first mass (1) and the second leaves (2) are connected to the frame (100), and four second pairs (13.2) of springs (10), of which the first leaves (11) are connected to the second mass (2) and the second leaves (12) are connected to the frame (100).

3. Sensor according to claim 2, in which the leaves of the springs of the first pairs (13.1) of springs (10) have adjacent leaves, together forming an angle of around 45°.

4. Sensor according to claim 2 or 3, in which the springs of the second pairs (13.2) of springs (10) have adjacent leaves, together forming an angle of around 45°.

5. Sensor according to any one of claims 2 to 4, in which the pairs of springs (10) comprise four third pairs (13.3) of springs (10), of which the first leaves (11) are connected to the first mass (1) and the second leaves (12) are connected to the second mass (2).

6. Sensor according to claim 5, in which the leaves of the springs of the third pairs (13.3) of springs (10) have adjacent leaves, together forming an angle of around 45°.

7. Sensor according to any one of the preceding claims, in which the first elastic leaves (11) of said at least one of the pairs (13.1, 13.2, 13.3) of springs, together form the angle of 45° and the second elastic leaves (12) of said at least one of the pairs (13.1, 13.2, 13.3) of springs, together form the angle of 45°.

8. Sensor according to any one of claims 1 to 7, in which the first elastic leaf (11) and the second elastic leaf (12) of each spring of said at least one of the pairs (13.1, 13.2, 13.3) of springs, together form the angle of 45°.

9. Sensor according to any one of the preceding claims, in which the elastic leaves (11, 12) of each spring (10), together form a convex angle oriented towards the other spring (10) of the same pair (13.1, 13.2, 13.3).

10. Sensor according to any one of the preceding claims, in which the masses (1, 2) have a square frame shape, the first mass (1) having diagonals (d) combined with diagonals (d) of the second mass (2), and the springs (10) of each pair (13.1, 13.2, 13.3) of springs (10) each extend on one side of one of the diagonals (d).

11. Sensor according to any one of the preceding claims, in which the four elastic leaves of at least one of the pairs of springs (13.1, 13.2, 13.3) comprises two pairs of adjacent elastic leaves (11, 12), together forming an angle of around 45°.
